# EUROPEAN PATENT APPLICATION

(11) **EP 3 348 614 A1**
(43) Date of publication of application: **18.07.2018**
(21) Application number: 17151562.0
(22) Date of filing: 16.01.2017
(51) Int. Cl.: C08K 7/02, C08K 7/04, C08K 7/06, C08K 7/08, C08K 7/14, C08K 7/16, C08K 7/18, C08K 7/20

(54) **POLYETHYLENE COMPOSITE AND A POLYETHYLENE COMPOSITE PIPE HAVING AN ULTRA-HIGH DENSITY, USE OF SUCH PIPE, A METHOD FOR LAYING SUCH PIPE AND A SYSTEM FOR PROVIDING UTILITY SERVICES**

(71) Applicant: Vinkel Stoustrup, Dennis, 7100 Vejle (DK); Nohr Cardel, Morten, 4600 Koge (DK)
(72) Inventor: Vinkel Stoustrup, Dennis, 7100 Vejle (DK); Nohr Cardel, Morten, 4600 Koge (DK)
(74) Representative: Rottenberg, Annabell Simone

(57) **Abstract**

The invention relates to a polyethylene composite comprising a base resin comprising a homo- or copolymer component and at least one additive embedded in the homo- or copolymer component. The polyethylene composite has a mass of more than 1,000 grams per cubic centimetre. The invention also relates to a pipe made from such polyethylene composite and to a use of such pipe. Furthermore, the invention relates to a method of laying such pipe and to a system for providing utility services, the system comprising such pipe.

## Description

### FIELD OF THE INVENTION

The invention relates to a polyethylene composite. The invention also relates to a pipe for providing one or more utility services. Furthermore, the invention relates to a method of laying a pipe for providing one or more utility services and also to a system for providing one or more utility services, the system comprising a pipe, in which the one or more utility services are passed from a main location to a remote location.

### BACKGROUND OF THE INVENTION

Polyethylene pipes are used for many purposes, one purpose being to provide one or more utility services to users of the services. One utility service could be passing drinking water from the main location to the remote location, possibly from a mainland to an island divided by water. Other utility services could be passing one or more cables for electrical power and/or for information services, or could be passing pipes for gas or hot water for heating purposes from a main location to a remote location, possibly from a mainland to an island divided by water.

One or more lengths of a polyethylene pipe are provided at the shore of the mainland or on a boat or a ship off the mainland coast. The polyethylene pipe may be floated in the water, along a water surface, because all polyethylene pipes have a density at or below 0.96 grams per cubic centimetre. Floating one or more lengths of polyethylene pipe in the water, along the water surface, is an easy and reliable way of transporting polyethylene pipes from the mainland to e.g. an island.

When the polyethylene pipe has been transported from the mainland to the island, the polyethylene pipe is still floating in the water, along the water surface. However, traffic by sea vessels is thereby impeded, and the polyethylene pipe must be placed at the bottom of the sea, where the polyethylene pipe passes.

Separate anchoring elements may be attached to the polyethylene pipe, one end of the anchoring elements or load elements being fixed to the bottom of the sea, which results in the polyethylene pipe also being fixed to the bottom of the sea. Alternatively, separate load elements may be attached to the polyethylene pipe in that way adding weight to the polyethylene pipe and resulting in the polyethylene pipe being dragged to the bottom of the sea.

### SUMMARY OF THE INVENTION

It may be an object of the invention to provide a polyethylene pipe which is easier to place at the bottom of a sea or another water-filled location. Alternatively or additionally, it may be an object of the invention to provide other elements for keeping the polyethylene composite pipe at the bottom of the sea or other water-filled location.

Alternatively or additionally, it may be an object of the invention to provide other ways of transporting a polyethylene pipe across a sea or other water-filled location, from one location to another location remote from the one location, e.g. from a mainland to an island.

One or more of the objects of the invention may be obtained by a polyethylene composite comprising a base resin comprising a homo- or copolymer component and at least one additive embedded in the homo-or copolymer component, the polyethylene composite having a density of more than 1,000 grams per cubic centimetre.

The invention is basically a polyethylene composite pipe having an ultra-high density of more than 1 gram per cubic centimetre. Of course, only the massive part of the polyethylene composite pipe, not the void interior of the polyethylene composite pipe, is adding to the density of the polyethylene composite pipe. A person skilled in the art would not be prompted to provide a polyethylene composite pipe with a density of more than 1 gram per cubic centimetre. The person skilled in the art would see many disadvantages of such a heavy pipe.

Firstly, the overall mass of a certain length of pipe having certain dimensions will increase, thereby increasing difficulties, and possibly increasing costs, during storage and transport and other handling of the polyethylene composite pipe.

Secondly, it is not possible to transport the polyethylene composite pipe across a sea or other water-filled location by floating one or more lengths of pipe along the water surface.

Thirdly, if the person skilled in the art were to provide a polyethylene composite pipe which in itself has a density of more than 1 gram per cubic centimetre, the person skilled in the art would be prompted to provide an inner or outer lining of metal or other relatively heavy material to the interior or to the exterior of the polyethylene composite pipe, after having transported, by floating, the polyethylene composite pipe along the water surface from the one location to the remote location.

According to a preferred embodiment of the invention, the polyethylene composite has a density of more than 1,020 grams per cubic centimetre, possibly more than 1,050 grams per cubic centimetre, possibly even more than 1.100 grams per cubic centimetre.

If the polyethylene composite pipe is to be placed in salt water, which has a density higher than 1 gram per cubic centimetre, the polyethylene composite pipe itself must have a density which is higher than the density of the salt water of the sea in which the polyethylene composite pipe is to be placed at the bottom. The density of salt water in different seas of the world varies.

Therefore, the density of the polyethylene composite pipe may be more above 1 gram per cubic centimetre if to be placed at the bottom of seas with salt water having a relatively high density, such as the Mediterranean Sea and the Atlantic Ocean, compared to other seas, such as the Black Sea and the Arctic Ocean, where the density of the salt water is lower than in the Mediterranean Sea and the Atlantic Ocean.

One or more objects of the invention may also be obtained by using a polyethylene composite pipe according to the invention, where the polyethylene composite of the pipe is selected as a polyethylene base resin comprising a homo- or copolymer component, and the material of the pipe has a density of more than 1,000 grams per cubic centimetre.

According to an aspect of a method according to the invention, the method comprises the following steps:
- providing a pipe according to the invention at a shore or brink or side or end of one of the following water-filled locations: a sea, a lake, a river, a stream, marshland, a meadow and other wetland, a sewer, a ditch, a gutter,
- displacing the pipe into the water of the water-filled location, and displacing the pipe along the water surface, or along and within the water, or along the bottom of, or along a trench of the bottom of the water-filled location,
- placing the pipe at the bottom of, or along a trench of, the water-filled location, not providing anchoring elements or load elements for keeping the pipe in place.

The invention also relates to a system with a pipe according to the invention for providing at least one of the following utility services: drinking water, electric power, gas for heating, gas for cooking, hot water for heating, internet connection, telephone connection, at a remote location distant from a main location, where the remote location is divided from the main location by a water-filled location, and where the at least one utility service is being provided from the main location to the remote location across the water-filled location.

According to a preferred embodiment of the polyethylene composite according to the invention, the polyethylene composite has a density of more than 1,020 grams per cubic centimetre, possibly more than 1,050 grams per cubic centimetre, possibly even more than 1,100 grams per cubic centimetre. A polyethylene composite having a density somewhat higher than 1,000 grams per cubic centimetre allows the polyethylene to have a density not only higher than fresh water, but higher than that of salt water of various oceans and seas around the world.

The at least one additive may be selected from the following materials: glass fibres, plant-based fibres, plastic-based fibres, carbon-based fibres, metal-based fibres, glass granulate, plant-based granulate, plastic-based granulate, carbon-based granulate, metal-based granulate. Various additives may be selected depending on the density of the additive and the ease of moulding the additive with the polyethylene, and possibly also depending on environmental issues of the additive and the possibility of recycling the polyethylene.

The additive may constitute between 4% and 20% of the composite, possibly between 6% and 15% of the composite or possibly between 6% and 12% of the composite. The amount of additive depends on the density of the additive and the intended density of the polyethylene according to the invention.

The object of the invention is also obtained by a pipe made from polyethylene composite according to any of the above-mentioned parameters of polyethylene according to the invention.

According to a possible embodiment of a pipe according to the invention, the polyethylene composite of the pipe is selected as a polyethylene base resin comprising a homo- or copolymer component and at least one of the following materials as an additive: Glass (SiO₂), Barium Sulfate (BaSO₄), Magnetite (Fe₃O₄) or Tungsten (W). The materials mentioned are especially suitable for moulding together with polyethylene.

According to an embodiment of the pipe according to the invention, the polyethylene composite of the pipe is selected as a polyethylene base resin comprising a homo- or copolymer component and at least one of the following materials as an additive: polyethylene terephthalate (PET) or polyvinyl chloride (vinyl).

Preferably, the pipe is manufactured having one of the following Standard Dimension Ratios (SDR): SDR 4, SDR6, SDR 7, SDR 7.4, SDR 9, SDR 11, SDR 13.6, SDR 17, SDR 17.6, SDR 21, SDR 26, SDR 33, SDR 41, where the Standard Dimension Ratio is calculated as a pipe outside diameter divided by a pipe wall thickness. The various values of SDR listed above are SDR values commonly used and are selected according to standards EN13201, EN 13244 and DIN 8074/75.

The pipe may be manufactured having one of the following configurations of the pipe: a rigid pipe stored and transported as a straight pipe, a flexible pipe stored and transported as a coiled-up pipe, possibly coiled-up on a drum. Storing and transport of the pipe according to the invention may be eased, if the pipe is coiled-up. Coiled-up pipes are pipes having relatively large SDR values. Pipes having relatively small SDR values are stored and transported as rigid pipes.

Non-dependent on the SDR value of the pipe, and non-dependant on individual lengths of coiled-up pipe or rigid, the pipes may be joined by welding, or by ends of the pies having inner and outer threading mutually compatible, by clamps keeping ends of pipes together, or by other suitable known or future method for joining polyethylene pipes.

The pipe may be used for placing one or more cables, tubes or pipes below water-level in at least one of the following locations: a sea, a lake, a river, a stream, marshland, a meadow and other wetland, a sewer, a ditch, a gutter. Any place where there is a risk of a polyethylene pipe floating, if submerged into water, the pipe according to the invention will eliminate the risk of floating.

The pipe may be used for passing at least one of the following utility services: drinking water, electric power, gas for heating, gas for cooking, hot water for heating, internet connection, telephone connection, below water surface in at least one of the following locations: a sea, a lake, a river, a stream, marshland, a meadow and other wetland, a sewer, a ditch and a gutter.

The objects of the invention may also be obtained by a method comprising the following steps:
- providing a pipe according to the invention at a shore or brink or side or end of one of the following water-filled locations: a sea, a lake, a river, a stream, marshland, a meadow and other wetland, a sewer, a ditch and a gutter,
- displacing the pipe into the water of the water-filled location, and displacing the pipe along the water surface, or along and within the water, or along the bottom of, or along a trench of the bottom of, the water-filled location,
- placing the pipe at the bottom of, or along a trench of, the water-filled location, not providing anchoring elements or load elements for keeping the pipe in place.

Not providing anchoring elements to a polyethylene pipe is contrary to the methods of today for keeping polyethylene pipes in place. Polyethylene pipes of today need anchoring elements, otherwise the pipes float to the water surface.

According to an aspect of the invention, the method comprises the additional steps of:
- before displacing the pipe into the water, attaching buoyancy elements to the pipe, the float assistance of the buoyancy elements being dependent on the density of the pipe and on the density of the water at the water-filled location, and
- after having displaced the pipe into the water, and when the pipe is at a location between the shore or brink or side or end of the water-filled location and the end location, detaching the buoyancy elements from the pipe.

Providing buoyancy elements to a polyethylene pipe is contrary to the methods of today for transporting polyethylene pipes along the water surface. Polyethylene pipes of today do not need buoyancy elements as the pipes themselves can float.

According to a further aspect of the invention, a method of placing one or more cables, tubes or additional pipes is provided, the method comprising the following steps:
- providing a pipe according to the invention at a shore or brink or side or end of one of the following locations: a sea, a lake, a river, a stream, marshland, a meadow and other wetland, a sewer, a ditch and a gutter,
- displacing the pipe into the water of the water-filled location, and displacing the pipe along the bottom of, or along a trench of, the location in question
- placing the pipe at the bottom of, or along the trench of, the water-filled location, not providing anchoring elements or load elements for keeping the pipe in place,
- providing the one or more cables, tubes or additional pipes at one open end of the pipe, and passing an end of the one or more cables, tubes or additional pipes into the open end of the pipe,
- displacing the one or more cables, tubes or additional pipes into the pipe towards an opposite, open end of the pipe.

The objects of the invention may also be obtained by a system for providing at least one of the following utility services: drinking water, electric power, gas for heating, gas for cooking, hot water for heating, internet connection, telephone connection, at a remote location distant from a main location, where the remote location is divided from the main location by a water-filled location, and where the at least one utility service is being provided from the main location to the remote location across the water-filled location, and said system comprising a pipe according to the invention.

### DETAILED DESCRIPTION OF EMBODIMENTS OF THE INVENTION

Polyethylene, even high-density polyethylene, has a density of less than 1 gram per cubic centimetre. The person skilled in the art prefers as low a density as possible. High-density polyethylene is developed for being used in many application, the main advantages being that high-density polyethylene is leak-proof and resistant to chemicals.

The invention uses additives to increase the density of polyethylene to more than 1 gram per cubic centimetres. A variety of additives may be added, however, limited by the amount of additives possible to add to the polypropylene, while still maintaining the physical integrity of the polyethylene composite pipe and still maintaining other parameters necessary for the actual use of the polyethylene composite pipe.

Possible additives to increase density of polypropylene are the following: Glass beads (SiO₂) having a density of approximately 2.65 grams per cubic centimetre, Barium Sulfate (BaSO₄) having a density of approximately 4.50 grams per cubic centimetre, Magnetite (Fe₃O₄) having a density of approximately 5.00 grams per cubic centimetre, and Tungsten (W) having a density of approximately 19.25 grams per cubic centimetre.

Glass beads are often the cheapest additive to add to polypropylene but may introduce non-intended effects to physical integrity of the polyethylene composite pipe. Tungsten is the most expensive additive. However, with a density of almost 20 grams per cubic centimetre, only a limited amount of tungsten is needed, and the effect of this additive to the physical integrity of the polyethylene composite pipe may be limited.

Other additives to increase the density of polypropylene are various fibres such as the following: glass fibres, plant-based fibres, plastic-based fibres, carbon-based fibres, and metal-based fibres.

Plant-based fibres may be any of the flowing fibres: Abaca, Bamboo, Banana, Coir, Flax, Henequen, Jute, Kenaf, Pineapple, Sisal, Sunhemp, Heat straw, wood fibre.

Among the fibres mentioned, preferably glass-fibres or metal-based fibres are used, because of these fibres having the highest density of the fibre-materials mentioned. However, for other reasons than just density, such as environmentally better suited or better suited for obtaining good physical integrity, possibly plant-based fibre-material may be used.

Among plastic-based fibres, possibly polyethylene terephthalate (PET) with a density of approximately 1.4 grams per cubic centimetre, or polyvinyl chloride (vinyl) with a density between 1.15 and 1.35 grams per cubic centimetre are used.

The additives are added during the extrusion process of the polyethylene composite pipe. The additives are embedded in the polypropylene and constitute an integrate part of the polyethylene composite pipe.

The polyethylene composite pipe manufactured, having one or more additives embedded in the polyethylene, may be manufactured in various outer diameters, various inner diameters, various wall thicknesses, and in various lengths. The polyethylene composite pipe is either made as a straight pipe of a certain length, or as a pipe capable of being coiled up, possibly capable of being coiled up on a drum.

The laying of the polyethylene composite pipe may be performed in different ways known to the person skilled in the art. The laying of the polyethylene composite pipe depends on the environment such as laying on the ground, laying in the ground, or laying in a sea, and depends on the machines available for laying the pipe, e.g. land-based vehicles or sea-based vessels.

Laying the polyethylene composite pipe in a sea may be performed by floating a plurality of polyethylene composite pipes on the water. Because the polyethylene composite pipe has a density higher than the density of the water of the sea, the plurality of polyethylene composite pipes need to be assisted in floating on the water. Assisting the polyethylene composite pipes in floating on the water may be performed in various ways.

One possible way of assisting the plurality of polyethylene composite pipes in floating on the water may be to provide the open opposite ends of the polyethylene composite pipe with watertight end caps. Water cannot enter into the polyethylene composite pipes. As the density of the air inside the polyethylene composite pipes is much lower than the density of the water, the polyethylene composite pipes will float on the water. When each polyethylene composite pipe is in position, but at the water level, where the polyethylene composite pipes are to be placed on the bottom of the sea, the end caps may be removed. Water will then fill the interior of the polyethylene composite pipes, and the polyethylene composite pipes will drop to the bottom of the sea.

If the polyethylene composite pipes need to be mutually attached at opposite, opposing ends of the polyethylene composite pipes, an end of one polyethylene composite pipe and an opposing end of another polyethylene composite pipe may need to be lifted out of the water. The end cap on the one end of the one pipe and the end cap on the opposing end of the other pipe, respectively, are removed. The one end of the one pipe and the opposing end of the other pipe are mutually connected, and water cannot enter the one end and the other end of the one pipe and the opposing pipe, respectively.

Alternatively, the polyethylene composite pipes may be dragged into the water from the shore of the sea, and may be dragged along the bottom of the sea. The one end of one pipe may be mutually attached to the opposing end of another subsequent pipe, just before the one end of the one pipe and the opposing end of the other pipe enter the water.

Possibly, a trench has been dug into the bottom of the sea, along which trench the polyethylene composite pipes are being dragged, and into which trench the polyethylene composite pipes are to be placed at the bottom of the sea. When the pipes are dragged into the sea, along the bottom of the sea, or along the trench at the bottom of the sea, water from the sea is constantly filling the interior of the pipe, maintaining the pipes at the bottom, no air being entrapped in the interior of the pipes.

After the polyethylene composite pipes have been dragged along the bottom of the sea, possibly along a trench at the bottom of the sea, the polyethylene composite pipes will stay in place at the bottom of the sea, because the polyethylene composite pipes have a density larger than the water of the sea. Anchoring elements and/or load elements are not needed for maintaining the polyethylene composite pipes at the bottom of the sea. However, because of currents in the water and/or turmoil in the water during windy conditions, anchoring elements and/or load elements may be attached to the pipes.

Dragging the polyethylene composite pipes into the water and along the bottom of the sea, or along a trench at the bottom of the sea, may be performed in various ways known to the person skilled in the art. Dragging the pipes into the water may be performed from sea level, from within the sea, or from the bottom of the sea.

Dragging from the sea level is performed by a boat or a ship, onto which one free end of the pipe, and possibly also parts of the pipes subsequent to the one free end, is attached. The ship sails from the shore towards the island or other end location such as an oil-drilling platform, to which the pipe is supposed to lead. Preferably, when a boat or a ship is dragging the pipe towards the end location, the pipe is assisted in floating at the water surface, or at least in the water, and not being dragged along the bottom of the sea.

As earlier mentioned, assisting the pipe in floating may be performed by providing the ends of the pipe with end caps. Alternatively, or additionally, buoyancy elements may be attached to the pipe. When the pipe is in position at water surfacel or within the water, where the pipe is to be placed, the end caps or the buoyancy elements for assisting the pipe in floating are removed, and the pipe falls to the bottom of the sea.

Dragging from within the water may be performed by a sub-marine or other sub-marine vessels such as sub-marine drones or sub-marine remotely operated vessels (ROV). The sub-marine vessel sails from the shore towards the island or other end location such as an oil-drilling platform, to which the pipe is supposed to lead. Preferably, when a sub-marine vessel is dragging the pipe towards the end location, the pipe is assisted in floating in the water, possibly assisted in floating at water surface, and not being dragged along the bottom of the sea.

As earlier mentioned, assisting the pipe in floating may be performed by providing the ends of the pipe with end caps. The pipe may be partly filled with water before attaching the end caps to adjust the buoyancy of the pipe to have the same density as the water of the sea. Alternatively, or additionally, buoyancy elements may be attached to the pipe, the buoyancy elements possibly selected to adjust the buoyancy of the pipe to have the same density as the water of the sea. When the pipe is in position within the water, or at the water level, where the pipe is to be placed, the end caps or the buoyancy elements for assisting the pipe in floating are removed, and the pipe falls to the bottom of the sea.

Dragging the pipe along the bottom of the sea or along a trench dug in the bottom of the sea may be performed by an underwater vehicle such as an underwater tractor with wheels or belts, or by underwater, bottom-situated remotely operated vessels (ROV). The underwater vehicle drives from the shore towards the island or other end location, such as an oil-drilling platform, to which the pipe is supposed to lead. When an underwater vehicle is dragging the pipe towards the end location, one free end of the pipe is attached to the underwater vehicle.

Along the remainder of the pipe, the pipe may be assisted in sliding along the bottom of the sea when being dragged along the bottom of the sea. Assisting the pipe in sliding along the bottom of the sea may be performed by rollers or sledges reducing friction with the bottom of the sea. Alternatively, or additionally, buoyancy elements may be attached to parts of the pipe, remote from the underwater vehicle, the buoyancy elements possibly selected to adjust the buoyancy of the pipe to have the same density as the water of the sea. When the pipe is in position within the water, where the pipe is to be placed, the possible elements for assisting the pipe in being dragged along the bottom of the sea are removed, and the pipe falls to the bottom of the sea.

## Claims

1. Polyethylene composite comprising a base resin comprising a homo-or copolymer component and at least one additive embedded in the homo- or copolymer component, the polyethylene composite having a density of more than 1,000 grams per cubic centimetre.

2. Polyethylene composite according to claim 1, wherein the polyethylene composite has a density of more than 1,020 grams per cubic centimetre, possibly more than 1,050 grams per cubic centimetre, possibly even more than 1,100 grams per cubic centimetre.

3. Polyethylene composite according to claim 1 or 2, where the at least one additive is selected from the following materials: glass fibres, plant-based fibres, plastic-based fibres, carbon-based fibres, metal-based fibres, glass granulate, plant-based granulate, plastic-based granulate, carbon-based granulate, metal-based granulate.

4. Polyethylene composite according to any of claims 1-3, where the additive constitutes between 4% and 20% of the composite, possibly between 6% and 15% of the composite, possibly between 6% and 12% of the composite.

5. Pipe made from polyethylene composite according to any of claims 1-4.

6. Pipe according to claim 5, where the polyethylene composite of the pipe is selected as a polyethylene base resin comprising a homo- or copolymer component and at least one of the following materials as an additive: Glass (SiO₂), Barium Sulfate (BaSO₄), Magnetite (Fe₃O₄) or Tungsten (W).

7. Pipe according to claim 5, where the polyethylene composite of the pipe is selected as a polyethylene base resin comprising a homo- or copolymer component and at least one of the following materials as an additive: polyethylene terephthalate (PET) or polyvinyl chloride (vinyl).

8. Pipe according to any of claims 5-7, where the pipe is manufactured having one of the following Standard Dimension Ratios (SDR): SDR 4, SDR6, SDR 7, SDR 7.4, SDR 9, SDR 11, SDR 13.6, SDR 17, SDR 17.6, SDR 21, SDR 26, SDR 33, SDR 41, where the Standard Dimension Ratio is calculated as a pipe outside diameter divided by a pipe wall thickness.

9. Pipe according to any of claims 5-8, where the pipe is manufactured as having one of the following configurations of the pipe: a rigid pipe stored and transported as a straight pipe, a flexible pipe stored and transported as a coiled-up pipe, possibly coiled up on a drum.

10. Use of a pipe according to any of claims 5-9 for placing one or more cables, tubes or pipes below water level in at least one of the following locations: a sea, a lake, a river, a stream, marshland, a meadow and other wetland, a sewer, a ditch and a gutter.

11. Use of a pipe according to any of claims 5-9 for passing at least one of the following utility services: drinking water, electric power, gas for heating, gas for cooking, hot water for heating, internet connection, telephone connection, below water level in at least one of the following locations: a sea, a lake, a river, a stream, marshland, a meadow and other wetland, a sewer, a ditch and a gutter.

12. Method of placing a pipe according to any of claims 1-9, the method comprising the following steps:
- providing a pipe according to any of claims 5-9 at a shore or brink or side or end of one of the following water-filled locations: a sea, a lake, a river, a stream, marshland, a meadow and other wetland, a sewer, a ditch, a gutter,
- displacing the pipe into the water of the water-filled location, and displacing the pipe along the water surface, or along and within the water, or along the bottom of, or along a trench of the bottom of, the water-filled location,
- placing the pipe at the bottom of, or along a trench of, the water-filled location, not providing anchoring elements or load elements for keeping the pipe in place.

13. Method according to claim 12, the method comprising the additional steps of:
- before displacing the pipe into the water, attaching buoyancy elements to the pipe, the float assistance of the buoyancy elements being dependent on the density of the pipe and on the density of the water at the water-filled location, and
- after having displaced the pipe into the water, and when the pipe is at a location between the shore or brink or side or end of the water-filled location and the end location, detaching the buoyancy elements from the pipe.

14. Method of placing one or more cables, tubes or additional pipes, the method comprising the following steps:
- providing a pipe according to any of claims 5-9 at a shore or brink or side or end of one of the following locations: a sea, a lake, a river, a stream, marshland, a meadow and other wetland, a sewer, a ditch, a gutter,
- displacing the pipe into the water of the water-filled location, and displacing the pipe along the bottom of, or along a trench of, the location in question
- placing the pipe at the bottom of, or along the trench of, the water-filled location, not providing anchoring elements or load elements for keeping the pipe in place,
- providing the one or more cables, tubes or additional pipes at one open end of the pipe, and passing an end of the one or more cables, tubes or additional pipes into the open end of the pipe,
- displacing the one or more cables, tubes or additional pipes into the pipe towards an opposite open end of the pipe.

15. System for providing at least one of the following utility services:
drinking water, electric power, gas for heating, gas for cooking, hot water for heating, internet connection, telephone connection, at a remote location distant from a main location, and the remote location being divided from the main location by a water-filled location, and where the at least one utility service is being provided from the main location to the remote location across the water-filled location, and said system comprising a pipe according to any of claims 5-9.
